# EUROPÄISCHE PATENTANMELDUNG

(11) **EP 3 826 130 A1**
(43) Veröffentlichungstag der Anmeldung: **26.05.2021**
(21) Anmeldenummer: 19209894.5
(22) Anmeldetag: 19.11.2019
(51) Int. Cl.: H02J 7/00

(54) **PASSIVES ZUSATZMODUL FÜR EINEN AKKUMULATOR, AKKUMULATOR MIT EINEM SOLCHEN ZUSATZMODUL UND VERFAHREN ZUR ENERGIEVERSORGUNG EINES PASSIVEN ZUSATZMODULS**

(71) Anmelder: FRONIUS INTERNATIONAL GmbH, 4643 Pettenbach (AT)
(72) Erfinder: BREITWIESER, Werner, 4643 Pettenbach (AT); EITELSEBNER, David Simon, 4643 Pettenbach (AT); BAUMGARTINGER, Werner, 4643 Pettenbach (AT); STINGLMAYR, Thomas, 4643 Pettenbach (AT)
(74) Vertreter: Sonn & Partner Patentanwälte

(57) **Zusammenfassung**

Die Erfindung betrifft ein passives Zusatzmodul (1) für Akkumulatoren (2), mit Anschlüssen (3, 3') zur Verbindung mit zumindest zwei CAN-Bus-Datenleitungen (CAN_{H}, CAN_{L}) eines CAN-Bustauglichen Ladegeräts (6), einen Akkumulator (2) mit einem solchen passiven Zusatzmodul (1) und ein Verfahren zur Energieversorgung eines solchen passiven Zusatzmoduls (1). Zur Schaffung eines passiven Zusatzmoduls (1), durch welches ein Akkumulator (2) identifiziert werden kann, ist ein mit den Anschlüssen (3, 3') verbundener CAN-Transceiver (4), eine mit dem CAN-Transceiver (4) verbundene Steuereinrichtung (8), eine Spannungsversorgungsschaltung (7), ein Energiespeicher (9) und ein mit der Steuereinrichtung (8) verbundener Datenspeicher (10) vorgesehen, und die Spannungsversorgungsschaltung (7) über den Energiespeicher (9) mit einer Ladeschaltung (5) verbunden, und die Ladeschaltung (5) mit zumindest einem Anschluss (3, 3'), und mit der Steuereinrichtung (8) verbunden, und die Ladeschaltung (5) dazu ausgebildet, den Energiespeicher (9) zumindest in den Pausen einer Kommunikation über die zumindest zwei CAN-Bus-Datenleitungen (CAN_{H}, CAN_{L}) aufzuladen.

## Beschreibung

Die Erfindung betrifft ein passives Zusatzmodul für Akkumulatoren, insbesondere Blei-Akkumulatoren, mit Anschlüssen zur Verbindung mit zumindest zwei CAN-Bus-Datenleitungen eines CAN-Bus-tauglichen Ladegeräts.

Weiters betrifft die Erfindung auch einen Akkumulator, insbesondere Blei-Akkumulator, mit zumindest zwei Anschlüssen.

Schließlich betrifft die vorliegende Erfindung ein Verfahren zur Energieversorgung eines passiven Zusatzmoduls für Akkumulatoren, insbesondere Blei-Akkumulatoren, über ein CAN-Bus-taugliches Ladegerät mit zumindest zwei CAN-Bus-Datenleitungen.

Moderne, wiederaufladbare Batterien bzw. Akkumulatoren verfügen häufig über eine integrierte Elektronik, welche zur Unterstützung eines intelligenten Lademanagements herangezogen werden kann. Beispielsweise verfügen moderne Lithium-Ionen-Batterien über Batterie-Managementsysteme, welche bestimmte Daten, wie z.B. die Seriennummer oder eine Identifikation (ID) der Batterie, oder Informationen über die Ladezyklen, usw., enthalten. Intelligente Ladegeräte, wie z.B. CAN-Bus-taugliche Ladegeräte, können somit die Identität des Akkumulators feststellen und das Ladeverfahren an den jeweiligen Akkumulator bzw. dessen Alter oder Zustand anpassen.

Beispielsweise beschreibt die US 2014/0277887 A1 ein Verfahren und ein System zur Erkennung der Art und Kapazität des Akkumulators und der Anpassung des Ladeverfahrens bei Energiespeichern für Elektrofahrzeuge.

Ältere Akkumulatoren oder bestimmte Akkumulatoren, wie z.B. Blei-Akkumulatoren, verfügen üblicherweise über keine integrierte Elektronik und können dadurch von intelligenten Ladegeräten nicht identifiziert werden. Es findet keine Übertragung von Daten, wie z.B. einer Seriennummer, Anzahl der Ladezyklen oder dgl., vom Akkumulator zum Ladegerät statt, wodurch kein intelligentes Lademanagement unterstützt werden kann.

Die Aufgabe der vorliegenden Erfindung besteht daher in der Schaffung eines oben genannten passiven Zusatzmoduls für Akkumulatoren, eines Akkumulators mit einem solchen passiven Zusatzmodul und eines Verfahrens zur Energieversorgung eines solchen passiven Zusatzmoduls für Akkumulatoren, durch welche einem Ackumulator ohne integrierter Elektronik bzw. ohne BatterieManagementsystem in einfacher Weise eine Identität bzw. gewisse Intelligenz verliehen werden kann. Dadurch sollen intelligente Ladeverfahren mithilfe von CAN-Bus-tauglichen Ladegeräten in Abhängigkeit des zu ladenden Akkumulators ermöglicht werden. Das passive Zusatzmodul soll möglichst einfach und kostengünstig aufgebaut sein und keine eigene unabhängige Energieversorgung aufweisen müssen. Nach einem Nachrüsten eines Akkumulators, insbesondere Blei-Akkumulators, mit dem passiven Zusatzmodul sollen die Vorteile von CAN-Bus-tauglichen Ladegeräten auch bei solchen Akkumulatoren ausgenützt werden können und auch bei solchen Ackumulatoren ein intelligentes Lademanagement erzielbar sein.

Gelöst wird die erfindungsgemäße Aufgabe durch ein oben genanntes passives Zusatzmodul, bei dem ein mit den Anschlüssen verbundener CAN-Transceiver zum Empfangen und Senden von über die CAN-Bus-Datenleitungen übertragenen Informationen, eine mit dem CAN-Transceiver verbundene Steuereinrichtung, eine Spannungsversorgungsschaltung, ein Energiespeicher und ein mit der Steuereinrichtung verbundener Datenspeicher vorgesehen ist, und die Spannungsversorgungsschaltung über den Energiespeicher mit einer Ladeschaltung verbunden ist, und die Ladeschaltung mit zumindest einem Anschluss und mit der Steuereinrichtung verbunden ist, und die Ladeschaltung dazu ausgebildet ist, den Energiespeicher zumindest in den Pausen einer Kommunikation über die zumindest zwei CAN-Bus-Datenleitungen aufzuladen. Erfindungsgemäß verfügt das passive Zusatzmodul für Akkumulatoren über eine Möglichkeit zur Kommunikation mit dem CAN-Bus eines CAN-Bus-tauglichen Ladegeräts, wobei zumindest dann, wenn keine Kommunikation über die CAN-Bus-Datenleitungen stattfindet, eine Aufladung des Energiespeichers des passiven Zusatzmoduls über den CAN-Bus des Ladegeräts stattfindet. Dadurch, dass das passive Zusatzmodul über keine eigenen Batterien verfügt, können die Herstellungskosten gering gehalten werden, jedoch auch der Aufwand für die Wartung des passiven Zusatzmoduls auf ein Minimum gesenkt werden. Da für die Installation keine Eingriffe im Bereich der Anschlüsse und Anschlussleitungen des Akkumulators durchgeführt werden müssen, ist eine Nachrüstung bestehender Systeme sehr kostengünstig und mit geringem Aufwand ohne Beeinträchtigung der Betriebssicherheit möglich. Bei einer Energieversorgung des passiven Zusatzmoduls über die Anschlüsse bzw. Anschlussleitungen des Akkumulators wäre die Betriebssicherheit nur mit höherem technischem Aufwand gewährleistbar. Bei der erfindungsgemäßen Energieversorgung des passiven Zusatzmoduls über die CAN-Bus-Datenleitungen hat das passive Zusatzmodul keinen Bezug zum üblicherweise höheren Spannungspotenzial des Akkumulators. Damit muss die Betriebssicherheit nicht mit zusätzlichem Aufwand hergestellt werden. Im Datenspeicher des passiven Zusatzmoduls kann insbesondere eine eindeutige Seriennummer gespeichert werden, welche zur Identifikation des jeweiligen Akkumulators herangezogen werden kann oder auch Informationen über die Anzahl von Ladezyklen des Akkumulators oder Informationen über die geeignete Ladekurve und weitere Informationen für intelligentes Batteriemanagement. Ein CAN-Bus-taugliches Ladegerät kann den Datenspeicher des passiven Zusatzmoduls auslesen, die ausgelesenen Informationen verarbeiten und z.B. Verfahren damit anpassen, sowie Informationen auf dem Datenspeicher ändern und schreiben. Ein an ein Computernetzwerk bzw. Internet angebundenes CAN-BUS-taugliches Ladegerät, kann anhand der eindeutigen Seriennummer zur Identifikation des Akkumulators weitere für den Akkumulator relevante Informationen oder Anweisungen von einem zentralen oder dezentralen, beispielsweise Cloud-basierten Datenzentrum beziehen oder an dieses senden. Mit der Aussage, dass das Laden des Energiespeichers des passiven Zusatzmoduls zumindest in den Pausen der Kommunikation über die CAN-Bus-Datenleitungen durchgeführt wird, soll zum Ausdruck gebracht werden, dass auch während der Kommunikation über die CAN-Bus-Datenleitungen zumindest ein Teil des Energieinhalts der übertragenen Daten zum Laden des Energiespeichers verwendet werden kann.
Das gegenständliche passive Zusatzmodul für Akkumulatoren zeichnet sich durch einen relativ einfachen Aufbau und eine kostengünstige Herstellbarkeit aus. Darüber hinaus kann das passive Zusatzmodul relativ klein aufgebaut werden, wodurch ein Nachrüsten an bestehende Akkumulatoren, insbesondere Blei-Akkumulatoren, sehr einfach und rasch ermöglicht wird. Beispielsweise kann das passive Zusatzmodul an den Anschlüssen oder Anschlussleitungen des Akkumulators oder an einem vorhandenen mit dem Akkumulator verbundenen Ladestecker montiert werden. Natürlich kann das passive Zusatzmodul auch bei der Herstellung des Akkumulators oder Ladesteckers eines Akkumulators gleich in diesen integriert werden. An dieser Stelle sei erwähnt, dass bekannter Weise ein CAN-Bus im Grunde aus den Datenleitungen CAN-High und CAN-Low besteht. Im Allgemeinen werden über Stecker zur Verbindung der CAN-Bus-Datenleitungen meist weitere Leitungen, beispielsweise Leitungen für sogenannte Versorgungs-, Pilot- oder Hilfskontakte, verbunden. Umgangssprachlich werden diese weiteren Leitungen und deren Kontakte verallgemeinert in Verbindung mit dem Begriff "CAN-Bus" bezeichnet. Der Begriff "CAN-Bus" wird auch oft verallgemeinernd für einen Anschluss oder eine Verbindung mit den CAN-Bus-Datenleitungen verwendet, auch wenn neben diesen CAN-Bus-Datenleitungen noch weitere Leitungen umfasst sind. Zur Wahrung der Klarheit werden daher die Datenleitungen des CAN-Bus als CAN-Bus-Datenleitungen bezeichnet. Das passive Zusatzmodul weist mindestens zwei Anschlüsse zur Verbindung mit zwei Anschlüssen des CAN-Bus auf, nämlich den CAN-Bus-Datenleitungen.
Die Verbindung des passiven Zusatzmoduls mit einem CAN-Bus eines Ladegeräts wird in den meisten Fällen über einen Ladestecker bzw. Ladekupplung hergestellt, über welchen auch der Ladestrom für das Laden des Akkumulators fließt. Handelsübliche Ladestecker weisen jedoch meist eine limitierte Anzahl von Anschlüssen für den CAN-Bus auf. Bei vielen üblichen Ladesteckern können nur zwei CAN-Bus-Anschlüsse verbunden werden (z.B. *Anderson-*Flachstecker) . Da für eine Kommunikation mittels der CAN-Bus-Datenleitungen bereits beide Anschlüsse des Ladesteckers belegt sind, entfällt die Möglichkeit der herkömmlichen Energieversorgung über normalerweise für die Energieversorgung zur Verfügung stehende Versorgungsleitungen. Bei Ladesteckern mit drei oder vier CAN-Bus-Anschlüssen wäre neben den CAN-Bus-Datenleitungen eine Energieversorgung über die übrigen Anschlüsse des CAN-Bus realisierbar.

Durch die Energieversorgung des passiven Zusatzmoduls über die CAN-Bus-Datenleitungen mittels Datenpaketen, anstatt einer dezidierten Leitung für die Energieversorgung, können dadurch eingesparte Anschlüsse am Ladestecker für andere Funktionen verwendet werden. Die Energieübertragung über die CAN-Bus-Datenleitungen wird soweit in ihrer Leistung bzw. Strom begrenzt, dass es zu keinen Fehlermeldungen oder Schäden der Komponenten kommt.

Der Energiespeicher des passiven Zusatzmoduls ist vorzugsweise durch zumindest einen Kondensator gebildet. Dies stellt eine kostengünstige und platzsparende Variante der Realisierung des Energiespeichers dar.

Wenn die Steuereinrichtung mit zumindest einem Anschluss zur Verbindung mit zumindest einem Sensor des Akkumulators verbunden ist, kann dem Ladegerät über das passive Zusatzmodul Information über den Zustand des Akkumulators übermittelt werden. Beispielsweise kann es sich bei einem Sensor um einen Temperatursensor handeln, der über den thermischen Zustand des Akkumulators Auskunft geben kann. Anstelle oder zusätzlich zu einem oder mehreren Temperatursensor(en) können weitere Sensoren, wie zum Beispiel Sensoren zur Spannungsmessung oder Füllstandsmessung des Elektrolyts des Akkumulators oder dergleichen vorgesehen sein. Dadurch kann bei einem Ladeverfahren mit einem CAN-Bus-fähigen Ladegerät der jeweilige Zustand des Akkumulators berücksichtigt werden und allenfalls der Ladestrom oder die Ladespannung an den jeweiligen Zustand, beispielsweise die vorhandene Temperatur, angepasst werden.

Gemäß einem weiteren Merkmal der Erfindung kann am passiven Zusatzmodul ein Anschluss zur Verbindung mit einem Start/Stopp-Detektor des Ladegeräts vorgesehen sein. Dadurch kann beim An- und Abschließen eines Akkumulators an das Ladegerät die Entstehung eines Lichtbogens verhindert werden. Gleichzeitig lässt sich damit feststellen, ob ein passives Zusatzmodul bzw. ein Ackumulator angeschlossen ist.

Gegebenenfalls kann die Steuereinrichtung mit einem weiteren Transceiver bzw. einer Kommunikationsschnittstelle verbunden sein. Bei diesem weiteren Transceiver kann es sich beispielsweise um einen NFC (Near Field Communication)-Transceiver handeln. Über einen solchen weiteren Transceiver, der sowohl drahtgebunden als auch drahtlos realisiert werden kann, ist ein Schreiben von Daten in den Datenspeicher des passiven Zusatzmoduls oder ein Lesen von Daten aus dem Datenspeicher des passiven Zusatzmoduls, sowie auch eine direkte Kommunikation mit der Steuereinrichtung möglich. Beispielsweise kann ein mit dem passiven Zusatzmodul ausgestatteter Akkumulator mithilfe eines NFC-fähigen Mobiltelefons mit einer entsprechenden Software bzw. App ausgelesen werden und beispielsweise Informationen über die Art, das Alter oder die Kapazität des Akkumulators ausgelesen werden. Darüber hinaus kann, z.B. bei einer neuen Anbringung des passiven Zusatzmoduls an einem Akkumulator, diesem eine bestimmte Seriennummer zugeordnet werden, indem diese Seriennummer vom NFC-fähigen Endgerät in den Datenspeicher des passiven Zusatzmoduls geschrieben wird.

Die Ladeschaltung enthält am Eingang vorzugsweise eine Diode, um einen Stromfluss von der Ladeschaltung zum Anschluss des passiven Zusatzmoduls zu verhindern.

Bevorzugterweise weist die Ladeschaltung des passiven Zusatzmoduls einen Strombegrenzer auf. Der Strombegrenzer wird auf einen Wert eingestellt, der verhindert, dass zumindest in den Pausen der Kommunikation über den CAN-Bus ein zu hoher Ladestrom fließt, der zu einer Störung im CAN-Bus-tauglichen Ladegerät führen könnte.

Der Strombegrenzer ist während der Kommunikation über die CAN-Bus-Datenleitungen auf einen Strom zwischen 0 und einem definierten Grenzwert einstellbar. Wenn der Strombegrenzer auf einen Strom von 0 Ampere eingestellt wird, findet bei einer Kommunikation über den CAN-Bus keine Ladung des Energiespeichers über die Ladeschaltung des passiven Zusatzmoduls statt. Bei einer vollständigen Entladung des Energiespeichers des passiven Zusatzmoduls kann auch ein definierter Grenzwert für den Strom eingestellt werden, mit dem eine erstmalige Ladung des Energiespeichers erfolgt. Wenn auch während der Kommunikation über den CAN-Bus eine gewisse Ladung des Energiespeichers des passiven Zusatzmoduls stattfinden soll, wird ein Grenzwert des Stroms im Strombegrenzer eingestellt, der einerseits eine gewisse Ladung des Energiespeichers zulässt, andererseits aber die Kommunikation über den CAN-Bus nicht gefährdet. Naturgemäß erfolgt die Ladung des Energiespeichers des passiven Zusatzmoduls während der Kommunikation über den CAN-Bus langsamer als in den Pausen der Kommunikation über den CAN-Bus, wo mehr Energie der über den CAN-Bus übertragenen Signale durch einen höheren Grenzwert des Strombegrenzers zum Laden des Energiespeichers verwendet werden kann.

Die Spannungsversorgungsschaltung des passiven Zusatzmoduls, welche sämtliche Komponenten mit elektrischer Energie versorgt, kann beispielsweise durch einen Hochsetzsteller bzw. Boost-Converter gebildet sein. Der Hochsetzsteller wandelt die Spannung des Energiespeichers auf einen oder auch mehrere Spannungswerte um, welche zur Versorgung der Komponenten des passiven Zusatzmoduls mit elektrischer Energie notwendig sind.

Die Steuereinrichtung ist vorzugsweise dazu ausgebildet, den CAN-Transceiver spätestens dann auszuschalten und den Energiespeicher über die Ladeschaltung aufzuladen, sobald ein unterer Schwellwert der Spannung des Energiespeichers unterschritten wurde. Auf diese Weise kann in Abhängigkeit des Ladezustands des Energiespeichers des passiven Zusatzmoduls eine Umschaltung zwischen Kommunikation über den CAN-Bus und Pausen der Kommunikation stattfinden. Immer dann, wenn ein unterer Schwellwert der Spannung des Energiespeichers unterschritten wird, erfolgt also gezwungenermaßen eine Ladung des Energiespeichers über den CAN-Bus, sodass die Funktion des passiven Zusatzmoduls immer gewährleistet wird. Die Steuereinrichtung kann auch dazu ausgebildet sein, dass während einer Kommunikation die Ladeschaltung aktiviert wird und nicht mehr Leistung von den Signalen einer Kommunikation für das Laden abzweigt, als für die Aufrechterhaltung einer erfolgreichen Kommunikation möglich ist. Die Steuereinrichtung erkennt, falls zu viel Leistung von den Signalen der Kommunikation für das Laden abgezweigt werden würde und reduziert den Ladestrom über die Ladeschaltung.

Wenn die Steuereinrichtung auch dazu ausgebildet ist, den CAN-Transceiver spätestens dann einzuschalten, sobald ein oberer Schwellwert der Spannung des Energiespeichers überschritten wurde, kann automatisch auf die Kommunikation umgeschaltet werden, da eine Ladung des Energiespeichers nicht notwendig ist.

Gemäß einem weiteren Merkmal der Erfindung weist das passive Zusatzmodul ein Gehäuse mit zumindest einer Vertiefung zur Aufnahme zumindest einer Anschlussleitung des Akkumulators auf. Durch diese Maßnahme wird die Befestigung des passiven Zusatzmoduls an einem bestehenden Akkumulator erleichtert.

Wenn über der zumindest einen Vertiefung zumindest ein Befestigungselement, beispielsweise ein Kabelbinder oder dgl., am Gehäuse befestigbar ist, kann das passive Zusatzmodul in geeigneter Weise an der zumindest einen Anschlussleitung des Akkumulators fixiert werden.

Gelöst wird die erfindungsgemäße Aufgabe auch durch einen oben genannten Akkumulator, insbesondere Blei-Akkumulator, mit zumindest zwei Anschlüssen, bei dem ein oben beschriebenes passives Zusatzmodul vorgesehen ist. Der Akkumulator erhält durch das passive Zusatzmodul zumindest eine eindeutige Identifikationsmöglichkeit. Insbesondere können bestehende Akkumulatoren durch das passive Zusatzmodul nachgerüstet werden. Zu den weiteren Vorteilen wird auf die obige Beschreibung des passiven Zusatzmoduls verwiesen.

An den Anschlüssen des Akkumulators können zwei Anschlussleitungen oder kann eine zweiadrige Anschlussleitung mit einem entsprechenden Ladestecker angeordnet sein. Das passive Zusatzmodul ist vorzugsweise an der zumindest einen Anschlussleitung befestigt. Diese Lösung ist insbesondere bei einer Nachrüstung bestehender Akkumulatoren vorteilhaft. Bei neuen Akkumulatoren kann natürlich das passive Zusatzmodul auch im Akkumulator bzw. dessen Gehäuse integriert werden.

Wie bereits oben erwähnt, kann im Akkumulator zumindest ein Temperatursensor vorgesehen sein, der mit dem passiven Zusatzmodul verbunden ist. Wie ebenfalls bereits oben erwähnt, kann dadurch ein Ladeverfahren mit einem CAN-Bus-tauglichen Ladegerät unter Berücksichtigung des aktuellen Temperaturzustands des Akkumulators erfolgen und dadurch der Akkumulator besonders schonend geladen werden.

Gelöst wird die erfindungsgemäße Aufgabe schließlich auch durch ein Verfahren zur Energieversorgung eines passiven Zusatzmoduls für Akkumulatoren, bei welchem zumindest in den Pausen einer Kommunikation über die CAN-Bus-Datenleitungen ein Energiespeicher über eine Ladeschaltung aufgeladen wird. Dadurch ist keine aktive Energiequelle im passiven Zusatzmodul erforderlich und es wird dennoch beim Verbinden des mit dem passiven Zusatzmodul verbundenen Akkumulators mit dem Ladegerät über Ladestecker rasch eine Ladung des im passiven Zusatzmodul vorhandenen Energiespeichers gewährleistet. Dadurch kann die Funktion des passiven Zusatzmoduls immer dann, wenn es benötigt wird, sichergestellt werden. Beim erstmaligen Verbinden des Ladegeräts mit dem passiven Zusatzmodul versehenen Akkumulator über Ladestecker bzw. Ladekupplung erfolgt zunächst ein Laden des Energiespeichers des passiven Zusatzmoduls, sodass die Versorgung sämtlicher Komponenten mit elektrischer Energie gewährleistet wird. Zumindest in den Pausen der Kommunikation über die CAN-Bus-Datenleitungen erfolgt das Laden des Energiespeichers des passiven Zusatzmoduls über den Energieinhalt der über die CAN-Bus-Datenleitungen gesendeten Datenpakete. Dabei werden die in den Pausen der Kommunikation übertragenen Daten idealerweise so gewählt, dass möglichst viel Energieinhalt in den übertragenen Daten zur Verfügung steht, um den Energiespeicher des passiven Zusatzmoduls möglichst rasch laden zu können. Im CAN-Protokoll ist üblicherweise die Länge der übertragenen Datenpakete beschränkt, weshalb üblicherweise eine Mehrzahl an Datenpaketen bzw. Ladenachrichten über die CAN-Bus-Datenleitungen übertragen wird. Mit Daten, welche möglichst viele logische "0" enthalten, kann wegen der höheren Spannungsdifferenz mehr Energie in kürzerer Zeit übertragen werden.

Wenn die Spannung des Energiespeichers gemessen wird und die Kommunikation über die CAN-Bus-Datenleitungen spätestens dann ausgeschaltet wird und der Energiespeicher über die Ladeschaltung aufgeladen wird, wenn ein unterer Schwellwert der Spannung des Energiespeichers unterschritten wird, kann automatisch von der Kommunikationsfunktion auf die Ladefunktion umgeschaltet werden.

Wenn die Spannung des Energiespeichers gemessen wird und die Kommunikation über die CAN-Bus-Datenleitungen spätestens dann eingeschaltet wird, wenn ein oberer Schwellwert der Spannung des Energiespeichers überschritten wird, kann auch eine automatische Umschaltung von der Ladefunktion auf die Kommunikationsfunktion stattfinden. Eine Kombination dieser beiden Funktionen ermöglicht eine automatische Ladung des Energiespeichers des passiven Zusatzmoduls immer dann, wenn diese notwendig ist. Wenn das passive Zusatzmodul über ausreichende Energie verfügt, wird die Möglichkeit der Kommunikation über den CAN-Bus freigeschaltet und es kann ein Datenaustausch zwischen dem passiven Zusatzmodul und dem CAN-Bus-tauglichen Ladegerät stattfinden.

Wenn eine Kommunikation über die CAN-Bus-Datenleitungen eingeschaltet wird, kann über die CAN-Bus-Datenleitungen ein Signal abgegeben werden. Bei dieser Variante sendet das passive Zusatzmodul ein Signal beispielsweise an das CAN-Bus-taugliche Ladegerät, um diesem mitzuteilen, dass der Energiespeicher des passiven Zusatzmoduls ausreichend geladen wurde. Nach Erhalt dieses Signals kann das CAN-Bus-taugliche Ladegerät automatisch in den Kommunikationsmodus umschalten und bestimmte Informationen an den mit dem passiven Zusatzmodul ausgestatteten Akkumulator senden bzw. Informationen zwischen Akkumulator und Ladegerät austauschen.

Die vorliegende Erfindung wird anhand der beigefügten Zeichnungen näher erläutert. Darin zeigen:
- Fig. 1: eine Prinzipskizze eines erfindungsgemäßen passiven Zusatzmoduls für einen Akkumulator, der mit einem CAN-Bustauglichen Ladegerät verbunden ist;
- Fig. 2: ein Blockschaltbild einer Ausführungsform eines passiven Zusatzmoduls für Akkumulatoren;
- Fig. 3: ein Blockschaltbild einer erweiterten Ausführungsform eines passiven Zusatzmoduls für einen Akkumulator;
- Fig. 4: Zeitdiagramme der Spannung des Energiespeichers des passiven Zusatzmoduls und der CAN-Bus-Datenleitungen zur Veranschaulichung des erfindungsgemäßen Verfahrens zum Laden des Energiespeichers des passiven Zusatzmoduls über die CAN-Bus-Datenleitungen;
- Fig. 5: eine Ausführungsform des Gehäuses eines passiven Zusatzmoduls;
- Fig. 6: das passive Zusatzmodul gemäß Fig. 5, welches an den Anschlussleitungen eines Akkumulators befestigt ist;
- Fig. 7: eine schematische Verbindung mittels Ladestecker und Ladebuchse in verbundenem Zustand; und
- Fig. 8: die schematische Verbindung gemäß Fig. 7 in teilweise geöffnetem Zustand.

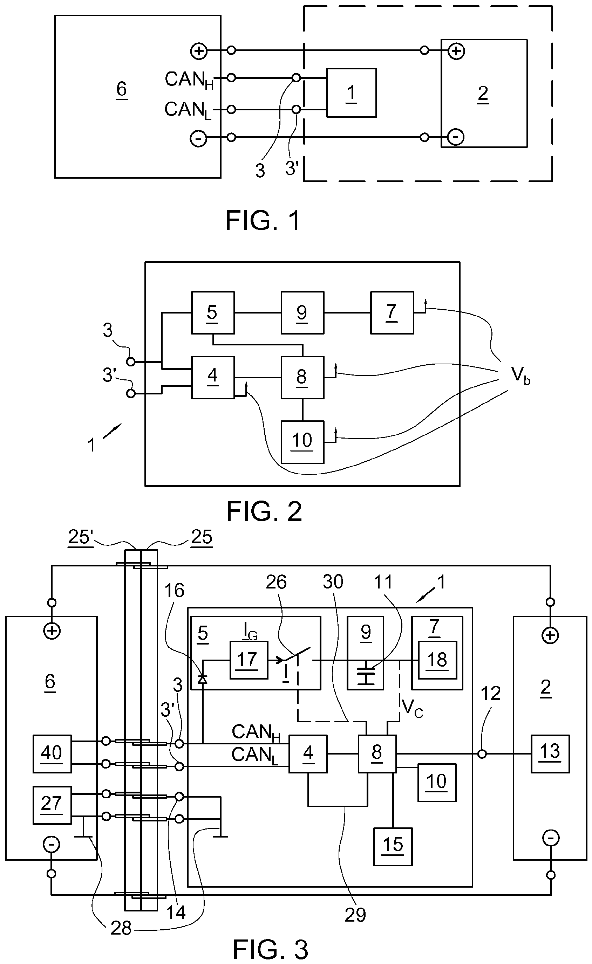

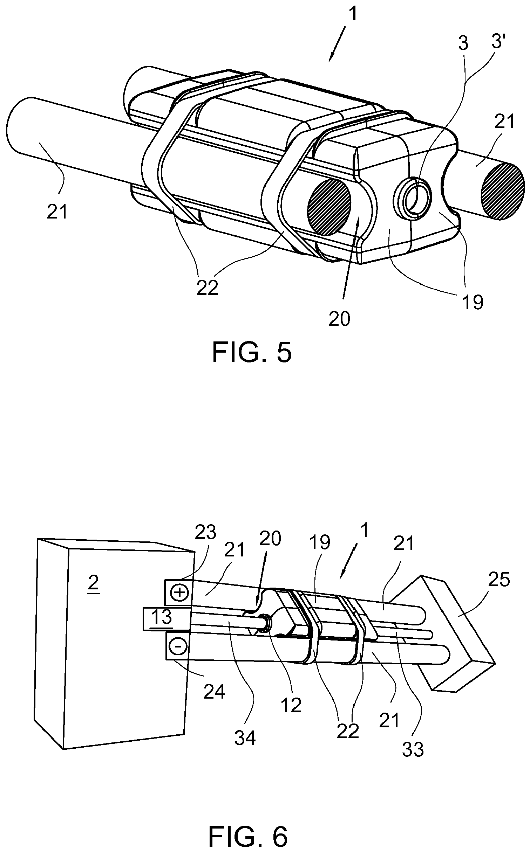

Fig. 1 zeigt eine Prinzipskizze eines erfindungsgemäßen passiven Zusatzmoduls 1 für einen Akkumulator 2, der mit einem CAN-Bus-tauglichen Ladegerät 6 verbunden ist. Das passive Zusatzmodul 1 verfügt über zumindest zwei Anschlüsse 3, 3', über die das passive Zusatzmodul 1 mit zumindest zwei CAN-Bus-Datenleitungen CAN_{H}, CAN_{L} eines CAN-Bus-tauglichen Ladegeräts 6 verbunden werden. Das passive Zusatzmodul 1 wird in geeigneter Weise mit dem Akkumulator 2, beispielsweise mit dem jeweiligen Ladestecker 25 (siehe Fig. 3 und 6) auf Seite des Akkumulators 2 verbunden oder kann auch in diesem integriert sein, wie durch die strichpunktierte Linie angedeutet. Dadurch, dass das passive Zusatzmodul 1 Informationen, wie z.B. eine eindeutige Identifikation oder Informationen über die geeignete Lademethode für den Akkumulator 2 beinhalten kann, kann ein CAN-Bus-taugliches Ladegerät 6 auch zum intelligenten Laden von Akkumulatoren 2 ohne eigenes Batteriemanagementsystem verwendet werden. Insbesondere bei Blei-Akkumulatoren, welche häufig für Flurförderfahrzeuge in der Intralogistik eingesetzt werden, kann dadurch ein einfaches Batteriemanagement geschaffen werden. Im einfachsten Fall enthält der Datenspeicher 10 (s. Fig. 2) des passiven Zusatzmoduls 1 eine eindeutige Identifikation, welche dem Akkumulator 2 eine eindeutige Identität verleiht.

In Fig. 2 ist ein Blockschaltbild einer Ausführungsform eines passiven Zusatzmoduls 1 für Akkumulatoren 2 dargestellt. Mit den Anschlüssen 3, 3' ist ein CAN-Transceiver 4 verbunden, der die Daten vom CAN-Transceiver 40 des Ladegeräts 6 (siehe Fig. 3) empfängt oder zum CAN-Transceiver 40 des Ladegeräts 6 sendet. Der CAN-Transceiver 4 ist mit der Steuereinrichtung 8 des passiven Zusatzmoduls 1 verbunden. Ebenso mit der Steuereinrichtung 8 verbunden ist ein Datenspeicher 10, der zumindest eine eindeutige Identifikation oder auch Informationen zum geeigneten Ladeverfahren eines Akkumulators 2 enthalten kann. Ein mit dem passiven Zusatzmodul 1 verbundenes CAN-Bus-taugliches Ladegerät 6 kann den Datenspeicher 10 auslesen, die ausgelesenen Informationen verarbeiten und z.B. Verfahren damit anpassen, sowie Informationen auf dem Datenspeicher 10 ändern und schreiben. Beispielsweise kann das an ein Computernetzwerk bzw. das Internet angeschlossene CAN-BUS-taugliche Ladegerät 6 anhand der im Datenspeicher 10 abgelegten eindeutigen Seriennummer zur Identifikation des Akkumulators 2 weitere für den Akkumulator 2 relevante Informationen oder Anweisungen von einem zentralen oder dezentralen, beispielsweise Cloud-basierten, Datenzentrum beziehen oder an dieses senden. In einer weiteren Ausführung kann im Datenspeicher 10 des passiven Zusatzmoduls 1 auch eine Information über die Nennspannung des Akkumulators 2 gespeichert sein. Das CAN-Bus-taugliche Ladegerät 6 ist mit der Information über die Nennspannung des Akkumulators 2 in der Lage, eine Ladespannung oder Ladekurve entsprechend anzupassen bzw. auszuwählen.

Erfindungsgemäß ist mit zumindest einem der Anschlüsse 3 oder 3' eine Ladeschaltung 5 verbunden, die über die Steuereinrichtung 8 entsprechend angesteuert wird. Die Ladeschaltung 5 ist mit einem Energiespeicher 9, beispielsweise einem Kondensator oder dgl., verbunden, in welchem die für eine Versorgung der Komponenten des passiven Zusatzmoduls 1 erforderliche Energiemenge gespeichert werden kann. Der Energiespeicher 9 wiederum ist mit einer Spannungsversorgungsschaltung 7 verbunden, welche sämtliche Komponenten des passiven Zusatzmoduls 1 mit der erforderlichen Spannung V_{b} oder den erforderlichen Spannungen versorgt. Bei der Spannungsversorgungsschaltung 7 kann es sich beispielsweise um einen Hochsetzsteller handeln, der die Spannung des Energiespeichers 9 auf ein für die Komponenten des passiven Zusatzmoduls 1 erforderliches Niveau anhebt. Erfindungsgemäß ist die Ladeschaltung 5 dazu ausgebildet, den Energiespeicher 9 zumindest in den Pausen einer Kommunikation über die zumindest zwei CAN-Bus-Datenleitungen CAN_{H}, CAN_{L} aufzuladen. Die Steuereinrichtung 8 erfasst somit über den CAN-Transceiver 4, wenn keine Kommunikation über den CAN-Bus stattfindet und steuert die Ladeschaltung 5 entsprechend an, sodass zumindest in den Pausen der Kommunikation über den CAN-Bus oder die zumindest zwei CAN-Bus-Datenleitungen CAN_{H}, CAN_{L} ein Laden des Energiespeichers 9 stattfinden kann. Im einfachsten Fall steuert die Steuereinrichtung 8 einen entsprechenden Schalter 26 (siehe Fig. 3) in der Ladeschaltung 5, sodass zumindest in den Pausen der Kommunikation über den CAN-Bus Energie über die Ladeschaltung 5 in den Energiespeicher 9 fließen kann. Erfindungsgemäß wird das passive Zusatzmodul 1 über CAN-Bus-Daten, welche vom CAN-Bus-tauglichen Ladegerät 6 gesendet werden, mit entsprechender Energie versorgt, welche die Funktion des passiven Zusatzmoduls 1 gewährleistet. Auf diese Weise kann ein Akkumulator 2, der über kein eigenes Batteriemanagementsystem verfügt, einfach nachgerüstet werden, ohne die Energie des Akkumulators 2 über die Ladeleitungen verwenden zu müssen. Insbesondere Blei-Akkumulatoren verfügen üblicherweise über keine Batteriemanagementsysteme und können somit in einfacher und kostengünstiger Weise so nachgerüstet werden, sodass ein geeignetes Laden mit CAN-Bus-tauglichen Ladegeräten 6 ermöglicht wird.

Fig. 3 zeigt ein Blockschaltbild einer erweiterten Ausführungsform eines passiven Zusatzmoduls 1 für einen Akkumulator 2. Zusätzlich zur Ausführungsvariante gemäß Fig. 2 beinhaltet das passive Zusatzmodul 1 einen Anschluss 12 zur Verbindung mit einem Sensor 13 des Akkumulators 2, beispielsweise einem Temperatursensor. Dadurch kann dem passiven Zusatzmodul 1 Information über den Wärmezustand des Akkumulators 2 übermittelt werden, welche beim Laden mit dem CAN-Bus-tauglichen Ladegerät 6 berücksichtigt werden kann. Sofern mehrere Sensoren 13 im Akkumulator 2 angeordnet sind, können auch mehrere Anschlüsse 12 zur Verbindung mit diesen Sensoren 13 im passiven Zusatzmodul 1 vorgesehen sein, welche mit der Steuereinrichtung 8 verbunden sind.

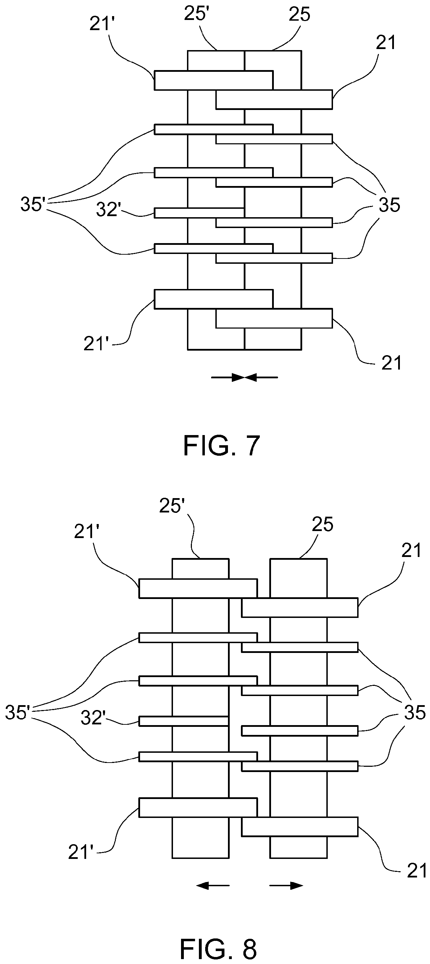

Weiters ist im passiven Zusatzmodul 1 ein Anschluss 14 zur Verbindung mit einem Start/Stopp-Detektor 27 des Ladegeräts 6 vorgesehen. Dadurch kann beim An- und Abschließen des Akkumulators 2 die Bildung eines Lichtbogens verhindert werden und so die Kontakte der Ladestecker 25 geschont werden (siehe Erläuterungen zu Fig. 7 und 8).

Die Steuereinrichtung 8 kann mit einem weiteren Transceiver 15 bzw. einer Kommunikationsschnittstelle verbunden sein, um den Datenspeicher 10 auslesen zu können oder Daten in den Datenspeicher 10 schreiben zu können. Der weitere Transceiver 15 bzw. die Kommunikationsschnittstelle kann drahtgebunden oder auch drahtlos ausgebildet sein, insbesondere durch einen NFC (Near Field Communication)-Transceiver gebildet sein. Eine derartig ausgeführtes passives Zusatzmodul 1 kann auch als einfache Schnittstelle bzw. einfacher Übersetzer zwischen NFC und Can-Bus dienen, mittels der zwischen einem NFC-fähigen Endgerät und einem anderen CAN-Bus-tauglichen Gerät eine Kommunikation ermöglicht wird. Ein derartiger Übersetzer kann für den direkten Anschluss an den CAN-BUS Anschluss eines CAN-Bus-taugliches Geräts ausgebildet sein und unterliegt damit nicht zwingend den genannten Einschränkungen die sich durch Ladestecker ergeben. Beispielsweise kann ein Servicetechniker, der z.B. den Elektrolyt eines Akkumulators 2 nachgefüllt hat, die erfolgte Nachfüllung dem Ladegerät 6 mit einem NFC-fähigen Endgerät mitteilen. Dies kann dem Zweck der Dokumentation oder dem Zweck der Anpassung des Ladeverfahrens durch das Ladegerät 6 dienen. Das CAN-Bus-taugliche Ladegerät 6 kann wiederum einem NFC-fähigem Endgerät über das passive Zusatzmodul 1 Informationen beispielsweise über dessen Zustand, Auslastung oder Unregelmäßigkeiten während der Ladung übermitteln. Ein CAN-Bus-taugliches Ladegerät 6 kann ebenfalls den Datenspeicher 10 des passiven Zusatzmoduls 1 lesen und beschreiben.

Die erfindungsgemäße Ladeschaltung 5 weist vorzugsweise eine Diode 16 auf, die einen Stromfluss von der Ladeschaltung 5 zum Anschluss 3 des passiven Zusatzmoduls 1 verhindert. Weiters enthält die Ladeschaltung 5 einen Strombegrenzer 17 (beispielsweise ein Widerstand), der den Stromfluss während der Ladung des Energiespeichers 9 auf einen Grenzwert I_{G} begrenzt, sodass keine Störungen im CAN-Bus-tauglichen Ladegerät 6 durch einen unzulässig hohen Strom I auftreten. Wenn eine Ladung des Energiespeichers 9, der beispielsweise durch entsprechende Kondensatoren 11 realisiert werden kann, während der Kommunikation über den CAN-Bus verhindert oder ausgeschaltet werden soll, wird der Strombegrenzer 17 in den Pausen einer Kommunikation über die CAN-Bus-Datenleitungen CAN_{H}, CAN_{L} auf einen Grenzwert I_{G}=0 Ampere eingestellt. Die Ladeschaltung 5 kann einen Schalter 26 beinhalten, der von der Steuereinrichtung 8 entsprechend angesteuert wird. Der Schalter 26 fällt in den geschlossenen Zustand, wenn der Energiespeicher 9 des passiven Zusatzmoduls 1 leer ist oder eine zu geringe Ladung aufweist, um den Schalter 26 offen zu halten.

Dadurch ist die Ladebereitschaft eines energielosen passiven Zusatzmoduls 1 auch dann gewährleistet, wenn die Steuereinrichtung 8 nicht aktiv ist. Bei nicht aktiver Steuereinrichtung 8 begrenzt die Ladeschaltung 5 einen Ladestrom auf eine maximale Stromstärke, bei der keine Überlastung oder ein fehlerhafter Zustand verursacht wird. Wenn das passive Zusatzmodul 1 mit ausreichend Energie versorgt ist und die Steuereinrichtung 8 dadurch aktiviert wird, steuert die Steuereinrichtung 8 den Schalter 26 über die Steuerleitung 30 an und begrenzt optional den Ladestrom der Ladeschaltung 5.

Alternativ kann in einer weiteren Ausführungsform die Funktion des Schalters 26 auch vom Strombegrenzer 17 ausgeführt werden. Dazu ist der Strombegrenzer 17 regelbar bzw. einstellbar ausgeführt. Diese Regelung erfolgt entsprechend über die Steuerleitung 30 (nicht dargestellt).

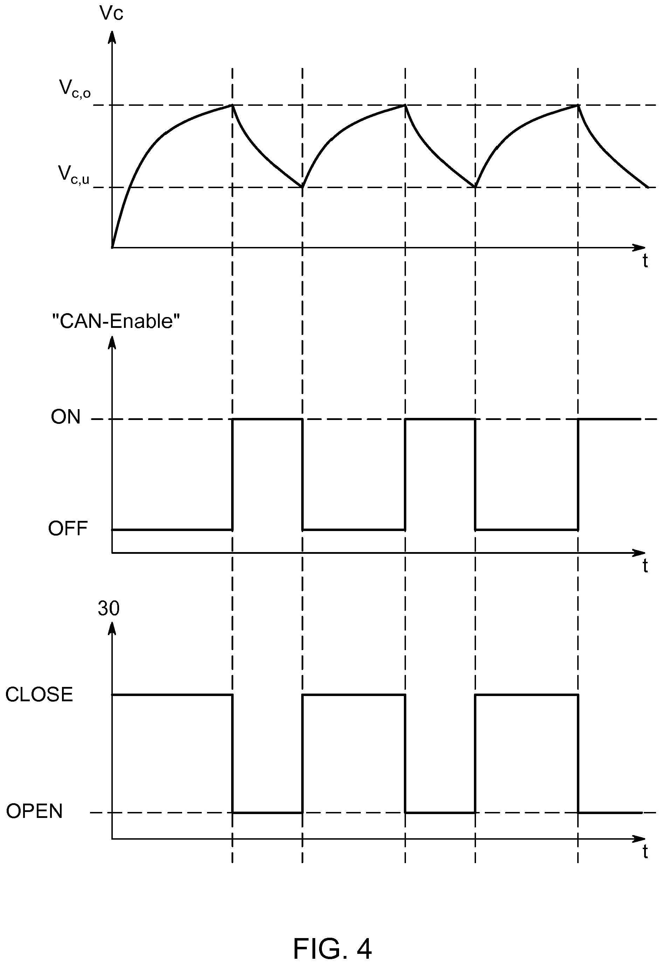

Die Spannungsversorgungsschaltung 7, welche mit dem Energiespeicher 9 verbunden ist, kann einen Hochsetzsteller und allenfalls weitere Schaltungen aufweisen, um die für die Versorgung sämtlicher Komponenten des passiven Zusatzmoduls 1 erforderliche Spannung bzw. erforderlichen Spannungen bereitstellen zu können. Wenn die Spannung V_{C} des Energiespeichers 9 von der Steuereinrichtung 8 erfasst wird (s. strichlierte Linie zwischen dem Energiespeicher 9 und der Steuereinrichtung 8), kann in Abhängigkeit des Ladezustands des Energiespeichers 9 die Ladeschaltung 5 durch die Steuereinrichtung 8 aktiviert und deaktiviert werden und automatisch zwischen einem Ladezustand und einem Kommunikationszustand umgeschaltet werden (s. Fig. 4). Es kann auch der Kommunikationszustand beibehalten werden und mit geeignet gesteuerter Strombegrenzung währenddessen geladen werden. Dem CAN-Transceiver 4 wird über eine Steuerleitung 29 ein entsprechendes Signal "CAN-Enable" übermittelt (sieh Fig. 4).

Die Ladung des Energiespeichers 9 erfolgt zumindest in den Pausen einer Kommunikation über die zumindest zwei CAN-Bus-Datenleitungen (CAN_{H}, CAN_{L}). Eine Pause der Kommunikation liegt z.B. vor, wenn das passive Zusatzmodul 1 keine Nachrichten sendet oder im Sinne von Information empfängt. Beispielsweise kann eine Pause der Kommunikation verschiedene Zustände aufweisen: der Energiespeicher 9 des passiven Zusatzmoduls 1 ist nicht ausreichend geladen oder leer; der CAN-Transceiver 4 im passiven Zusatzmodul 1 ist deaktiviert; das passive Zusatzmodul 1 signalisiert keine Bereitschaft zur Kommunikation oder ist nicht mit einem CAN-Bus-tauglichen Ladegerät 6 verbunden; der CAN-Transceiver 40 im CAN-Bus-tauglichen Ladegerät 6 sendet Ladenachrichten. In den Pausen einer Kommunikation sendet der CAN-Transceiver 40 im Ladegerät 6 Ladenachrichten, welche von einem verbundenen passiven Zusatzmodul 1 für die Ladung des Energiespeichers 9 verwendet werden können. Nach erfindungsgemäßer Sichtweise handelt es sich beim Senden oder Empfangen von Ladenachrichten nicht um Kommunikation. Das passive Zusatzmodul 1 signalisiert dem CAN-Bus-tauglichen Ladegerät 6 Kommunikationsbereitschaft, sobald der Energiespeicher 9 ausreichend geladen ist. Dadurch, dass ein passives Zusatzmodul 1 angeschlossen ist, erkennt das Ladegerät 6 ob das Senden von Ladenachrichten an das passive Zusatzmodul 1 fortgesetzt werden soll, oder dazu übergegangen werden soll, Abfragen, Befehle oder Information zu senden. Um zu signalisieren, dass die Informationen vom passiven Zusatzmodul 1 empfangen, verstanden bzw. verarbeitet wurden, schickt das passive Zusatzmodul 1 ein Bestätigungssignal an das Ladegerät 6 zurück. Falls während des Empfangs oder der Verarbeitung das passive Zusatzmodul 1 die Empfangsbereitschaft oder die Verarbeitung abbricht, um beispielsweise den Energiespeicher 9 aufzuladen, bekommt das Ladegerät 6 kein Bestätigungssignal mehr zurück. Bei Ausbleiben des Bestätigungssignals geht das Ladegerät 6 dazu über, Ladenachrichten zu senden bis das passive Zusatzmodul 1 dem Ladegerät 6 erneut Kommunikationsbereitschaft signalisiert. Das Ladegerät 6 kann dann die Kommunikation an der Stelle wieder fortsetzen, wo sie zuvor abgebrochen ist. In einer anschließenden Pause einer Kommunikation sendet das Ladegerät 6 Ladenachrichten. Ein kommunikationsbereites passives Zusatzmodul 1 kann nach länger andauerndem Empfang von Ladenachrichten entscheiden, dass momentan keine Kommunikationsbereitschaft erforderlich ist und den Energiespeicher 9 zu laden, sofern dieser nicht vollständig geladen ist.

In Fig. 4 sind Zeitdiagramme der Spannung des Energiespeichers 9 des passiven Zusatzmoduls 1 und der CAN-Bus-Datenleitungen CAN_{H}, CAN_{L} zur Veranschaulichung des erfindungsgemäßen Verfahrens zum Laden des Energiespeichers 9 des passiven Zusatzmoduls 1 über die CAN-Bus-Datenleitungen CAN_{H}, CAN_{L} gezeichnet. Die Steuereinrichtung 8 misst die Spannung V_{C} am Energiespeicher 9. Sobald ein oberer Schwellwert V_{C,o} der Spannung V_{C} des Energiespeichers 9 erreicht bzw. überschritten wurde, wird auf eine Kommunikation über die CAN-Bus-Datenleitungen CAN_{H}, CAN_{L} umgeschaltet, indem ein entsprechendes Signal "CAN Enable" auf der Steuerleitung 29 aktiviert wird. Wenn die Kommunikation über die CAN-Bus-Datenleitungen CAN_{H}, CAN_{L} aktiviert wird, kann gleichzeitig die Ladung über die Ladeschaltung 5 deaktiviert werden, indem der Schalter 26 in der Ladeschaltung 5 (s. Fig. 3) über die Steuerleitung 30 deaktiviert bzw. geöffnet wird. Sobald die Spannung V_{C} am Energiespeicher 9 einen vorgegebenen unteren Schwellwert V_{C,u} erreicht bzw. unterschreitet, kann die Kommunikation über die CAN-Bus-Datenleitungen CAN_{H}, CAN_{L} wieder ausgeschaltet werden, indem das Signal "CAN Enable" auf der Steuerleitung 29 ausgeschaltet wird und durch Aktivieren bzw. Schließen des Schalters 26 über die Steuerleitung 30 der Ladeschaltung 5 ein Laden des Energiespeichers 9 über die CAN-Bus-Datenleitungen CAN_{H}, CAN_{L} ermöglicht werden.

Das Schließen des Schalters 26 durch die Steuereinrichtung 8 und eine damit optional verbundene Pause einer Kommunikation hängt nicht ausschließlich vom Unterschreiten des Schwellwertes V_{C,u} ab. Das passive Zusatzmodul 1 kann ebenso oberhalb von V_{C,u} noch vor dem Erreichen von V_{C,o} entscheiden, ein Signal abzugeben um dem Ladegerät 6 Kommunikationsbereitschaft zu signalisieren. Das kann besonders die Wartezeit bis zur ersten Kommunikation zwischen Ladegerät 6 und passivem Zusatzmodul 1 verkürzen, wodurch das Ladegerät 6 schnellstmöglich die Seriennummer, ID, oder Nennspannung eines Akkumulators 2 erfragen kann. Während das Ladegerät 6 nach Erhalt dieser Information erste Vorbereitungen für die Ladung des Akkumulators 2 vornimmt bzw. bereits mit der Ladung startet, kann der Energiespeicher 9 des passiven Zusatzmoduls 1 weiter aufgeladen werden, um in der Folge ausreichend Energie für komplexere Aufgaben des passiven Zusatzmoduls 1 bereitstellen zu können, sowie eine längere Kommunikation ohne Unterbrechung zu ermöglichen.

Fig. 5 zeigt eine Ausführungsform des Gehäuses 19 eines passiven Zusatzmoduls 1. Das Gehäuse 19 weist zumindest eine Vertiefung 20 auf, in welcher zumindest eine Anschlussleitung 21 des Akkumulators 2 aufgenommen werden kann, um eine rasche und einfache Befestigung des passiven Zusatzmoduls 1 an dem jeweiligen Akkumulator 2 zu unterstützen. Über Befestigungselemente 22 kann das passive Zusatzmodul 1 an den Anschlussleitungen 21 befestigt werden.

Fig. 6 zeigt das passive Zusatzmodul 1 gemäß Fig. 5, welches an den Anschlussleitungen 21 eines Akkumulators 2 befestigt ist. Die Anschlussleitungen 21 verlaufen von den Anschlüssen 23, 24 des Akkumulators 2 zum Ladestecker 25 am Ende der Anschlussleitungen 21. Zusätzlich zu der zumindest einen Vertiefung 20 am Gehäuse 19 können Befestigungselemente 22, wie z.B. Kabelbinder oder dgl., am Gehäuse 19 befestigt werden, sodass das passive Zusatzmodul 1 bzw. das Gehäuse 19 mit der zumindest einen Anschlussleitung 21 des Akkumulators 2 fest verbunden werden können. Im dargestellten Beispiel verfügt der Akkumulator 2 über zwei Anschlussleitungen 21, die durch entsprechende Vertiefungen 20 am Gehäuse 19 des passiven Zusatzmoduls 1 verlaufen und mit entsprechenden Befestigungselementen 22 fixiert werden. Zwischen dem passivem Zusatzmodul 1 und dem Akkumulator 2 kann auch zumindest eine Anschlussleitung 34 zur Verbindung des passiven Zusatzmoduls 1 mit einem im Akkumulator befindlichem Sensor 13 (nicht dargestellt) vorgesehen sein. Über eine Anschlussleitung 33 kann das passive Zusatzmodul 1 mit dem Ladestecker 25 verbunden sein.

Schließlich wird in den Fig. 7 und Fig. 8 eine Verbindung eines Ladesteckers 25 eines Akkumulators 2 mit einer entsprechenden Ladebuchse 25' eines CAN-Bus-tauglichen Ladegeräts 6 in einem verbundenen und einem teilweise geöffneten Zustand schematisch dargestellt. Der mit dem Akkumulator 2 verbundene Ladestecker 25 beinhaltet die entsprechenden Kontakte für die Verbindung mit den Anschlussleitungen 21 des Akkumulators 2 und vier Kontakte 35 zur Verbindung mit den Anschlüssen des CAN-Bus. Die mit dem CAN-Bus-tauglichen Ladegerät 6 verbundene Ladebuchse 25' beinhaltet die entsprechenden Kontakte für die Verbindung mit den Anschlussleitungen 21' des CAN-Bus-tauglichen Ladegeräts 6 und drei Kontakte 35' zur Verbindung mit den Anschlüssen des CAN-Bus auf Seiten des CAN-Bus-tauglichen Ladegeräts 6. Ein Kontakt 32' ist etwas kürzer ausgebildet als die restlichen Kontakte 35' zur Verbindung mit den Anschlüssen des CAN-Bus des CAN-Bus-tauglichen Ladegeräts 6. Dieser verkürzte Kontakt 32' ist mit dem Start/Stop-Detektor 27 im CAN-Bus-tauglichen Ladegerät 6 verbunden (siehe Fig. 3).

In Fig. 7 sind der Ladestecker 25 und die Ladebuchse 25' vollständig ineinander gesteckt bzw. miteinander verbunden und alle Kontakte haben entsprechenden Kontakt. Der mit dem Start/Stop-Detektor 27 im CAN-Bus-tauglichen Ladegerät 6 verbundene Kontakt 32' ist ebenfalls mit einem der vier Kontakte 35 im Ladestecker 25 kontaktiert.

Im teilweise geöffneten Zustand des Ladesteckers 25 und der Ladebuchse 25' gemäß Fig. 8 wird der verkürzte Kontakt 32' der Ladebuchse 25' früher vom entsprechenden Kontakt 35 am Ladestecker 25 getrennt, bevor noch die übrigen Kontakte 35, 35' des CAN-Bus geöffnet wurden. Dadurch kann über den Start/Stop-Detektor 27 im CAN-Bus-tauglichen Ladegerät 6 die Trennung erkannt werden und der Ladestrom abgeschaltet werden, bevor die Kontakte 21, 21' getrennt werden. Damit wird verhindert, dass Lichtbögen zwischen den Kontakten bei der Trennung des Ladesteckers 25 von der Ladebuchse 25' entstehen und dadurch die Lebensdauer der Komponenten erhöht.

Das erfindungsgemäße passive Zusatzmodul 1 kann in einfacher Weise an bestehenden Akkumulatoren 2 angeordnet werden, wodurch der Akkumulator 2 vom CAN-Bus-tauglichen Ladegerät 6 erkannt werden kann und entsprechend dem erkannten Akkumulator 2 ein Batterie- oder Lademanagement durchgeführt werden kann. Das passive Zusatzmodul 1 wird über die CAN-Bus-Datenleitungen CAN_{H}, CAN_{L} des CAN-Bus-tauglichen Ladegeräts 6 mit elektrischer Energie versorgt und muss somit über keine eigene aktive Energiequelle verfügen, was die Herstellungskosten des passiven Zusatzmoduls 1 und die Notwendigkeit einer Wartung entsprechend reduziert.

## Patentansprüche

1. Passives Zusatzmodul (1) für Akkumulatoren (2), insbesondere Blei-Akkumulatoren, mit Anschlüssen (3, 3') zur Verbindung mit zumindest zwei CAN-Bus-Datenleitungen (CAN_{H}, CAN_{L}) eines CAN-BUS-tauglichen Ladegeräts (6), **dadurch gekennzeichnet, dass** ein mit den Anschlüssen (3, 3') verbundener CAN-Transceiver (4) zum Empfangen und Senden von über die CAN-Bus-Datenleitungen (CAN_{H}, CAN_{L}) übertragenen Informationen, eine mit dem CAN-Transceiver (4) verbundene Steuereinrichtung (8), eine Spannungsversorgungsschaltung (7), ein Energiespeicher (9) und ein mit der Steuereinrichtung (8) verbundener Datenspeicher (10) vorgesehen ist, und dass die Spannungsversorgungsschaltung (7) über den Energiespeicher (9) mit einer Ladeschaltung (5) verbunden ist, wobei die Ladeschaltung (5) mit zumindest einem Anschluss (3, 3'), und mit der Steuereinrichtung (8) verbunden ist, und die Ladeschaltung (5) dazu ausgebildet ist, den Energiespeicher (9) zumindest in den Pausen einer Kommunikation über die zumindest zwei CAN-Bus-Datenleitungen (CAN_{H}, CAN_{L}) aufzuladen.

2. Passives Zusatzmodul (1) nach Anspruch 1, **dadurch gekennzeichnet, dass** die Steuereinrichtung (8) mit zumindest einem Anschluss (12) zur Verbindung mit zumindest einem Sensor (13) des Akkumulators (2) verbunden ist.

3. Passives Zusatzmodul (1) nach Anspruch 1 oder 2, **dadurch gekennzeichnet, dass** ein Anschluss (14) zur Verbindung mit einem Start/Stopp-Detektor (27) des Ladegeräts (6) vorgesehen ist.

4. Passives Zusatzmodul (1) nach einem der Ansprüche 1 bis 3, **dadurch gekennzeichnet, dass** die Steuereinrichtung (8) mit einem weiteren Transceiver (15), insbesondere einem NFC (Near Field Communication)-Transceiver, verbunden ist.

5. Passives Zusatzmodul (1) nach einem der Ansprüche 1 bis 4, **dadurch gekennzeichnet, dass** die Ladeschaltung (5) einen Strombegrenzer (17) aufweist.

6. Passives Zusatzmodul (1) nach Anspruch 5, **dadurch gekennzeichnet, dass** der Strombegrenzer (17) während der Kommunikation über die CAN-Bus-Datenleitungen (CAN_{H}, CAN_{L}) auf einen Strom (I) zwischen 0 und einem definierten Grenzwert (I_{G}) einstellbar ist.

7. Passives Zusatzmodul (1) nach einem der Ansprüche 1 bis 6, **dadurch gekennzeichnet, dass** die Steuereinrichtung (8) dazu ausgebildet ist, den CAN-Transceiver (4) spätestens dann auszuschalten und den Energiespeicher (9) über die Ladeschaltung (5) aufzuladen, sobald ein unterer Schwellwert (V_{C,u}) der Spannung (V_{C}) des Energiespeichers (9) unterschritten wurde.

8. Passives Zusatzmodul (1) nach einem der Ansprüche 1 bis 7, **dadurch gekennzeichnet, dass** die Steuereinrichtung (8) dazu ausgebildet ist, den CAN-Transceiver (4) spätestens dann einzuschalten, sobald ein oberer Schwellwert (V_{C,o}) der Spannung (V_{C}) des Energiespeichers (9) überschritten wurde.

9. Passives Zusatzmodul (1) nach einem der Ansprüche 1 bis 8, **dadurch gekennzeichnet, dass** ein Gehäuse (19) mit zumindest einer Vertiefung (20) zur Aufnahme zumindest einer Anschlussleitung (21) des Akkumulators (2) vorgesehen ist.

10. Passives Zusatzmodul (1) nach Anspruch 9, **dadurch gekennzeichnet, dass** über der zumindest einen Vertiefung (20) zumindest ein Befestigungselement (22), beispielsweise ein Kabelbinder oder dgl., am Gehäuse (19) befestigbar ist.

11. Akkumulator (2), insbesondere Blei-Akkumulator, mit zumindest zwei Anschlüssen (23, 24), **dadurch gekennzeichnet, dass** ein passives Zusatzmodul (1) nach einem der Ansprüche 1 bis 10 vorgesehen ist.

12. Verfahren zur Energieversorgung eines passiven Zusatzmoduls (1) für Akkumulatoren (2), insbesondere Blei-Akkumulatoren, über ein CAN-Bus-taugliches Ladegerät (6) mit zumindest zwei CAN-Bus-Datenleitungen (CAN_{H}, CAN_{L}), **dadurch gekennzeichnet, dass** zumindest in den Pausen einer Kommunikation über die CAN-Bus-Datenleitungen (CAN_{H}, CAN_{L}) ein Energiespeicher (9) über eine Ladeschaltung (5) aufgeladen wird.

13. Verfahren nach Anspruch 12, **dadurch gekennzeichnet, dass** die Spannung (V_{C}) des Energiespeichers (9) gemessen wird und die Kommunikation über die CAN-Bus-Datenleitungen (CAN_{H}, CAN_{L}) spätestens dann ausgeschaltet wird und der Energiespeicher (9) über die Ladeschaltung (5) aufgeladen wird, wenn ein unterer Schwellwert (V_{C,u}) der Spannung (V_{C}) des Energiespeichers (9) unterschritten wird.

14. Verfahren nach Anspruch 12 oder 13, **dadurch gekennzeichnet, dass** die Spannung (V_{C}) des Energiespeichers (9) gemessen wird und die Kommunikation über die CAN-Bus-Datenleitungen (CAN_{H}, CAN_{L}) spätestens dann eingeschaltet wird, wenn ein oberer Schwellwert (V_{C,o}) der Spannung (V_{C}) des Energiespeichers (9) überschritten wird.

15. Verfahren nach einem der Ansprüche 12 bis 14, **dadurch gekennzeichnet, dass** über die CAN-Bus-Datenleitungen (CAN_{H}, CAN_{L}) ein Signal abgegeben wird, wenn die Kommunikation über die CAN-Bus-Datenleitungen (CAN_{H}, CAN_{L}) eingeschaltet wird.
